# EUROPÄISCHE PATENTANMELDUNG

(11) **EP 1 403 109 A2**
(43) Veröffentlichungstag der Anmeldung: **31.03.2004**
(21) Anmeldenummer: 03020598.3
(22) Anmeldetag: 18.09.2003
(51) Int. Cl.: B60J 1/20, F16C 29/02

(54) **Führungsschiene und Schlitten, insbesondere für ein Sonnenschutzrollo in einem Kraftfahrzeug**

(30) Priorität: 30.09.2002 DE 10245929
(71) Anmelder: ArvinMeritor GmbH, 63128 Dietzenbach (DE)
(72) Erfinder: Hock, Daniel, 63867 Johannesberg (DE); Büttner, Alexander, 63856 Bessenbach (DE)
(74) Vertreter: Sties, Jochen, Dipl.-Ing.

(57) **Zusammenfassung**

Eine Baugruppe besteht aus mindestens einer Führungsschiene (10) und einem Schlitten (12), der in der Führungsschiene verschiebbar ist, insbesondere für ein Rollo oder einen Schiebehimmel für ein Kraftfahrzeug, wobei die Führungsschiene mit einer Bremsfläche (18) versehen ist und der Schlitten ein Bremselement (26) aufweist, das mit der Bremsfläche zusammenwirken kann, so daß der Schlitten in der Führungsschiene arretiert ist, wobei der Schlitten mindestens eine Feder (32) aufweist, die den Schlitten so beaufschlagt, daß das Bremselement (26) gegen die Bremsfläche (18) gedrückt wird, und wobei der Schlitten (12) mindestens eine Kippkante (42) aufweist, die von dem Bremselement (26) so beabstandet ist, daß der Schlitten entgegen der Wirkung der Feder (32) um die Kippkante (42) geschwenkt werden kann, wodurch das Bremselement (26) von der Bremsfläche gelöst wird.

## Beschreibung

Die Erfindung betrifft eine Baugruppe bestehend aus mindestens einer Führungsschiene und einem Schlitten, der in der Führungsschiene verschiebbar ist, insbesondere für ein Rollo oder einen Schiebehimmel für ein Kraftfahrzeug.

Der Schlitten soll in der Führungsschiene zum einen leicht verschiebbar sein, damit geringe Betätigungskräfte erforderlich sind, um das Rollo oder den Sonnenschutz nach vorne oder nach hinten zu schieben. Andererseits muß gewährleistet sein, daß der Schlitten in der Führungsschiene in der jeweiligen Position verbleibt, damit sich das Rollo oder der Sonnenschutz nicht unbeabsichtigt während der Fahrt des Fahrzeugs verstellen kann, insbesondere unter der Wirkung einer Rückzugsfeder, wie sie für Rollos verwendet wird.

Die Erfindung schafft eine Baugruppe, bei welcher beide Anforderungen erfüllt werden: zum einen ist der Schlitten besonders leicht in der Führungsschiene verschiebbar, und zum anderen wird er zuverlässig in seiner jeweiligen Stellung arretiert. Zu diesem Zweck ist erfindungsgemäß bei der Baugruppe vorgesehen, daß die Führungsschiene mit einer Bremsfläche versehen ist und der Schlitten ein Bremselement aufweist, das mit der Bremsfläche zusammenwirken kann, so daß der Schlitten in der Führungsschiene arretiert ist, wobei der Schlitten mindestens eine Feder aufweist, die den Schlitten so beaufschlagt, daß das Bremselement gegen die Bremsfläche gedrückt wird, und wobei der Schlitten mindestens eine Kippkante aufweist, die von dem Bremselement so beabstandet ist, daß der Schlitten entgegen der Wirkung der Feder um die Kippkante geschwenkt werden kann, wodurch das Bremselement von der Bremsfläche gelöst wird. Bei dieser Gestaltung wird das Bremselement automatisch von der Bremsfläche gelöst, sobald der Schlitten in der Führungsschiene gelöst wird und dabei um die Kippkante kippt. Sobald der Schlitten nicht weiter in der Führungsschiene verstellt wird, wird er von der Feder wieder in seine Ausgangsstellung zurückgedrückt, in der das Bremselement an der Bremsfläche anliegt. Der Schlitten ist wieder zuverlässig arretiert.

Gemäß der bevorzugten Ausführungsform der Erfindung ist vorgesehen, daß der Schlitten bezüglich einer Querebene, die durch das Bremselement verläuft, symmetrisch ist, und daß an jedem Ende des Schlittens eine Kippkante vorgesehen ist. Weiterhin kann auf jeder Seite der Querebene eine Feder vorgesehen sein. Bei dieser Gestaltung kippt der Schlitten in Abhängigkeit von der Richtung, in der er in der Führungsschiene verschoben wird, um die eine oder die andere Kippkante, und zwar um die in der jeweiligen Verstellrichtung vorne liegende Kippkante.

Vorzugsweise bestehen die Kippkante und der Teil der Feder, der an der Führungsschiene anliegt, aus einem Material mit einem niedrigen Reibungskoeffizienten. Dies gewährleistet, daß der Schlitten mit geringer Reibung in der Führungsschiene verstellt werden kann. Vorzugsweise besteht der gesamte Körper des Schlittens aus einem Material mit einem niedrigen Reibungskoeffizienten.

Gemäß der bevorzugten Ausführungsform der Erfindung ist vorgesehen, daß die Feder eine Blattfeder ist, die an ihrem freien Ende mit einer Abstützkappe versehen ist, die aus dem Material mit dem niedrigen Reibungskoeffizienten besteht. Die Blattfeder kann mit geringem Aufwand in den Körper des Schlittens eingegossen werden.

Gemäß der bevorzugten Ausführungsform der Erfindung ist die Bremsfläche durch zwei einander schräg gegenüberliegende Seitenflächen einer Nut gebildet, wobei zwei Bremselemente vorgesehen sind, die auf entgegengesetzten Seiten des Schlittens angeordnet sind. Da die beiden Bremselemente von der Feder gegen die schräg angeordneten Seitenflächen der Nut gedrückt werden, ergibt sich eine Keilwirkung, was die Bremswirkung deutlich erhöht.

Vorzugsweise sind zwei einander gegenüberliegende Führungsschienen vorgesehen, in denen jeweils ein Schlitten angeordnet ist, wobei die beiden Schlitten durch einen Spriegel miteinander verbunden sind, an dem ein Griff angebracht ist. Der Griff wird üblicherweise unterhalb der Führungsschiene liegen, so daß er, wenn er betätigt wird, die notwendige Kippbewegung der beiden Schlitten in der Führungsschiene automatisch hervorruft.

Die Erfindung wird nachfolgend anhand einer bevorzugten Ausführungsform beschrieben, die in den beigefügten Zeichnungen dargestellt ist. In den Zeichnungen zeigen:
- Figur 1 in einer schematischen Seitenansicht eine Führungsschiene und einen Schlitten im arretierten Zustand;
- Figur 2 einen Schnitt entlang der Ebene II von Figur 1;
- Figur 3 einen Schnitt entlang der Ebene III von Figur 1;
- Figur 4 einen Schnitt entlang der Ebene IV von Figur 1;
- Figur 5 in einer schematischen Seitenansicht eine Führungsschiene und einen Schlitten, wobei sich der Schlitten in einem ersten gelösten Zustand befindet;
- Figur 6 einen Schnitt entlang der Ebene VI von Figur 5;
- Figur 7 einen Schnitt entlang der Ebene VII von Figur 5;
- Figur 8 einen Schnitt entlang der Ebene VIII von Figur 5;
- Figur 9 in einer schematischen Seitenansicht eine Führungsschiene und einen Schlitten, wobei sich der Schlitten in einem zweiten gelösten Zustand befindet;
- Figur 10 einen Schnitt entlang der Ebene X von Figur 9;
- Figur 11 einen Schnitt entlang der Ebene XI von Figur 9;
- Figur 12 einen Schnitt entlang der Ebene XII von Figur 9;
- Figur 13 in einer schematischen, perspektivischen Ansicht einen Schlitten mit daran angebrachtem Spriegel; und
- Figur 14 den Schlitten von Figur 13 in einer weiteren perspektivischen Ansicht.

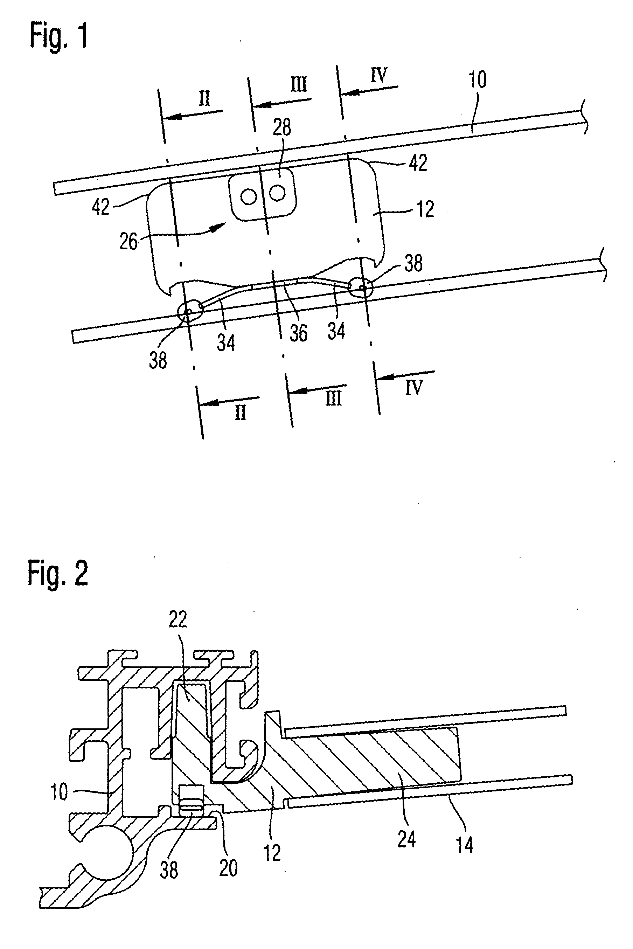

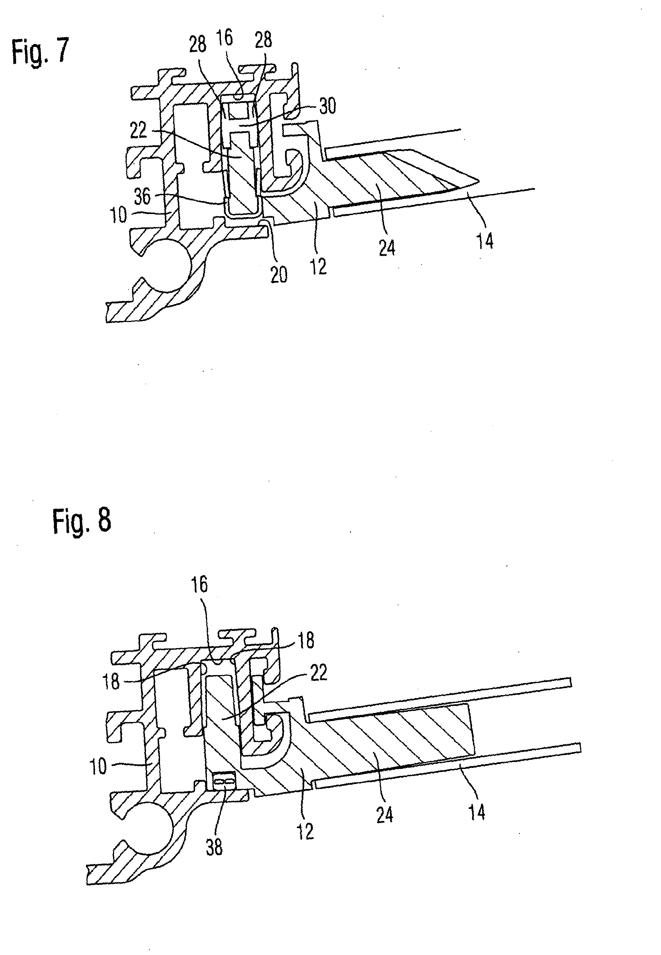

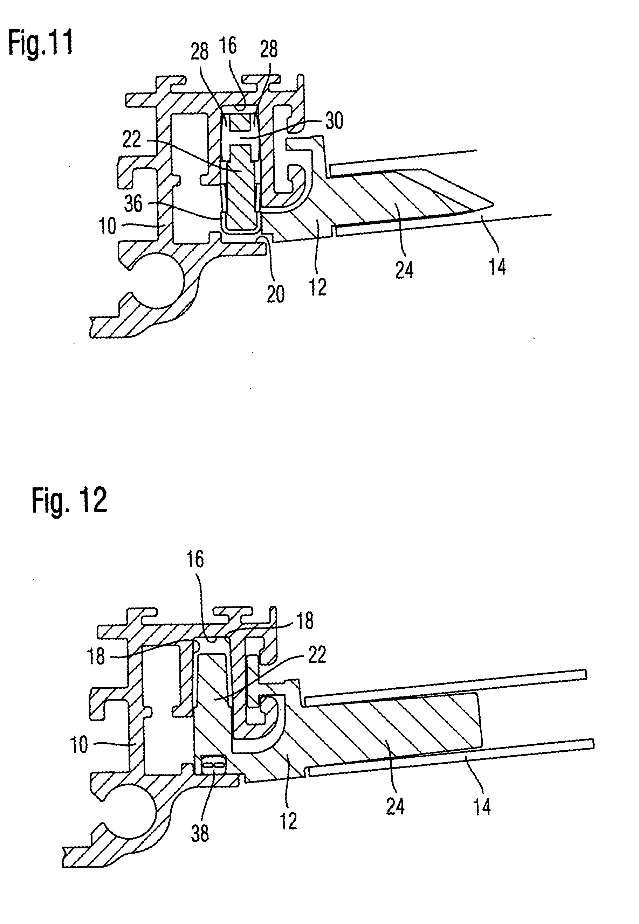

In den Figuren 1 bis 12 ist eine Führungsschiene 10 zu sehen, in der ein Schlitten 12 verschiebbar angeordnet ist. Die Führungsschiene 10 ist am Dach eines Fahrzeugs angebracht und verläuft etwa parallel zur Längsrichtung des Fahrzeugs. Es sind zwei einander gegenüberliegende Führungsschienen vorgesehen, die üblicherweise parallel zueinander verlaufen. Dementsprechend sind auch zwei einander gegenüberliegende Schlitten 12 vorgesehen. Diese sind miteinander durch einen Spriegel 14 verbunden, der somit quer zur Längsrichtung des Fahrzeugs verläuft. Mit dem Spriegel ist ein Rollo oder Sonnenschutz verbunden, das unterhalb einer Dachöffnung angeordnet werden kann, die mit einem Deckel eines Schiebedachsystems verschließbar ist. Das Rollo ist an seinem bezüglich der Fahrrichtung des Fahrzeugs hinteren Ende in einem Gehäuse aufgenommen, aus dem es entgegen der Wirkung einer Rückzugsfeder nach vorne herausgezogen werden kann. Am vorderen Ende ist es durch den Spriegel 14 und die beiden Schlitten 12 fixiert. Die beiden Schlitten 12 dienen dazu, das Rollo in jeder beliebigen Stellung in der Führungsschiene zu arretieren, so daß es von der Rückzugsfeder nicht unbeabsichtigt in das Gehäuse zurückgezogen wird.

Jede Führungsschiene 10 ist hier als tiefgezogenes Profilteil aus einer Aluminiumlegierung ausgeführt und weist eine Führungsnut 16 auf, in welcher der Schlitten 12 angeordnet ist. Die Führungsnut weist zwei einander schräg gegenüberliegende Seitenflächen 18 auf, die als Bremsflächen wirken. Auf der dem Boden der Führungsnut 16 gegenüberliegenden Seite ist die Führungsschiene mit einer Abstützfläche 20 versehen.

Der Schlitten 12 weist einen allgemein rechteckigen Körper 22 auf, der in dem Raum zwischen der Führungsnut 16 und der Abstützfläche 20 angeordnet ist. Von dem Körper 22 steht seitlich ein Verbindungsfortsatz 24 ab, der mit dem Spriegel 14 verbunden ist. Auf der in der Führungsnut 16 angeordneten Seite des Körpers 22 ist ein Bremselement 26 angeordnet, das aus einem Kunststoff- oder Gummimaterial mit hohem Reibungskoeffizienten besteht und zwei außenliegende Kissen 28 aufweist, die durch einen Verbindungssteg 30 miteinander verbunden sind. Die beiden Kissen 28 liegen auf den Außenseiten des Körpers 22 und sind den Seitenflächen 18 der Führungsnut 16 zugeordnet.

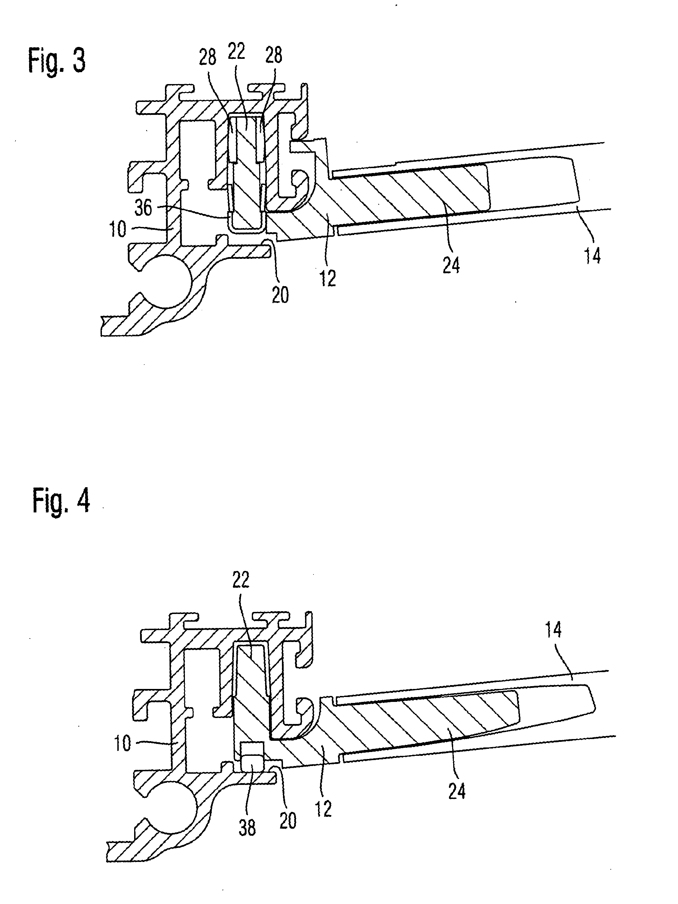

Auf der vom Boden der Führungsnut 16 abgewandten Seite ist am Körper 22 des Schlittens 12 eine Feder 32 angeordnet, die als Blattfeder mit zwei Federarmen 34 und einem Mittelabschnitt 36 ausgebildet ist. Der Mittelabschnitt 36 umgreift den Körper 22 des Schlittens 12 seitlich (siehe Figur 3), so daß die Feder 32 sicher am Schlitten 12 befestigt ist. Die beiden Federarme 34 erstrecken sich in der Längsrichtung des Körpers 22 und sind an ihren freien Enden jeweils mit einer Abstützkappe 38 versehen. Jede Abstützkappe 38 besteht aus einem Material mit einem niedrigen Reibungskoeffizienten und stützt sich an der Abstützfläche 20 der Führungsschiene 10 ab. Das Material der Abstützkappen 38 ist insbesondere dasselbe wie das Material des Körpers 22 des Schlittens 12, so daß auch der Körper 22 einen niedrigen Reibungskoeffizienten gegenüber der Führungsschiene 10 aufweist.

Wie in Figur 1 zu sehen ist, ist der Schlitten 12 spiegelsymmetrisch bezüglich einer Mittelebene aufgebaut, die hier mit der Schnittebene III zusammenfällt.

Im Ausgangszustand, wie er in den Figuren 1 bis 4 gezeigt ist, wird der Körper 22 des Schlittens 12 von der Feder 32, deren Abstützkappen 38 sich an der Abstützfläche 20 der Führungsschiene 10 abstützen, in die Führungsnut 16 hineingedrückt. Dabei liegen die beiden Kissen 28 des Bremselementes 26 an den als Bremsflächen wirkenden Seitenflächen 18 der Führungsnut 16 an. Da die Seitenflächen 18 der Führungsnut 16 schräg zur Wirkungsrichtung der Feder 32 angeordnet sind, ergibt sich eine Kraftverstärkung durch eine Keilwirkung, wodurch der Schlitten 12 an der entsprechenden Position in der Führungsschiene 10 zuverlässig arretiert ist. Die bereitgestellte Haltekraft ist insbesondere ausreichend, um zu verhindern, daß der Schlitten 12 und der mit diesem verbundene Spriegel 14 von den Rückzugskräften, die auf das Rollo einwirken, in der Führungsschiene 10 unbeabsichtigt verschoben wird.

Gemäß einer nicht dargestellten Ausführungsvariante kann vorgesehen sein, daß anstelle der beiden außenliegenden Kissen 28 ein einziges Kissen vorgesehen ist, das auf der Seite des Körpers 22 des Schlittens angeordnet ist, die dem Boden der Führungsnut 16 zugewandt ist. Es könnte auch vorgesehen sein, daß dieses mittig angeordnete Kissen zusätzlich zu den beiden außenliegenden Kissen 28 vorgesehen ist. Es kann auch nach Art einer Brücke ausgebildet sein, so daß es die beiden außenliegenden Kissen miteinander verbindet.

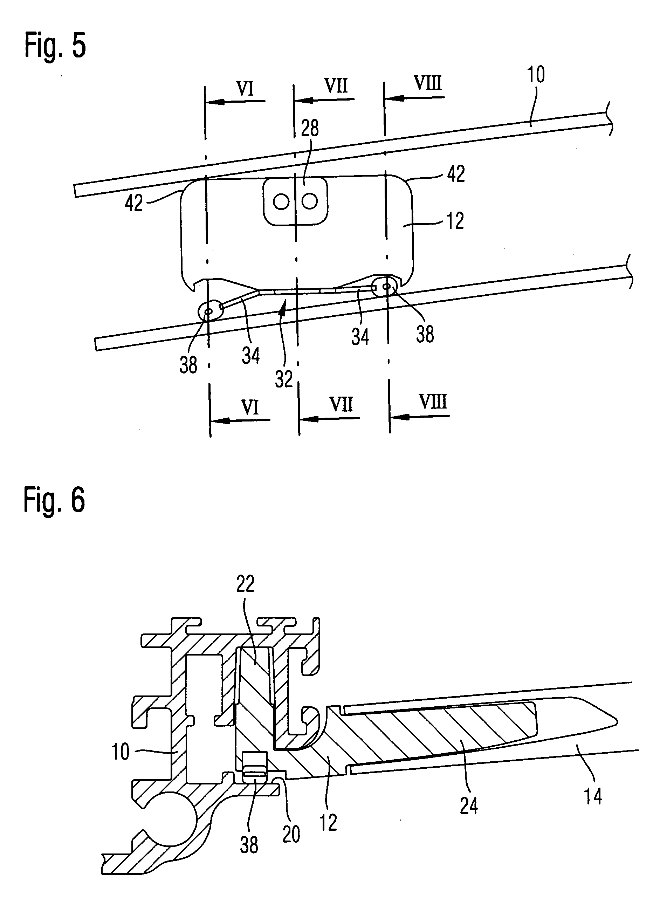

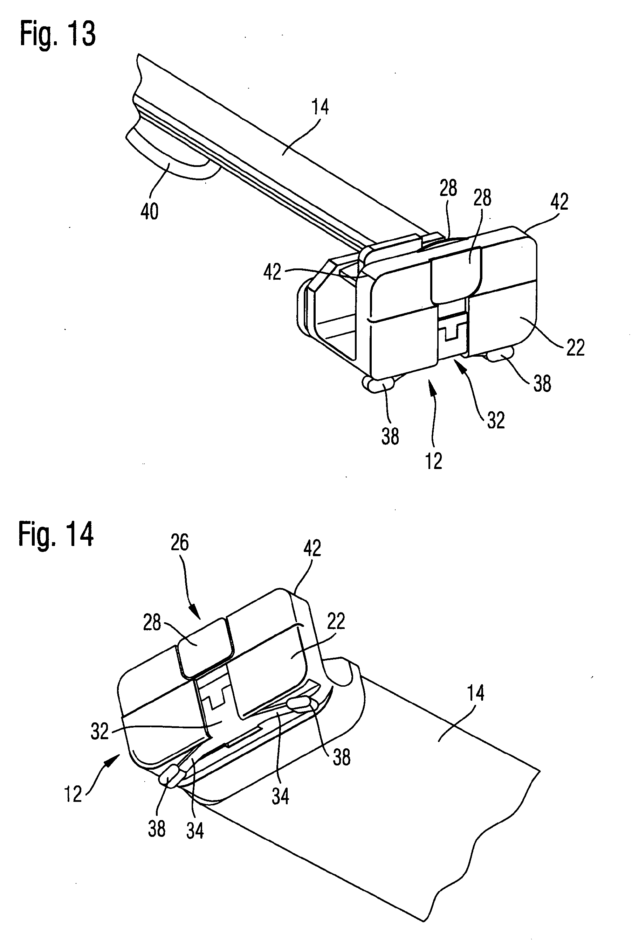

Wenn das Rollo von einem Benutzer verstellt werden soll, greift dieser an einem Griff 40 (siehe Figur 13) an, der am Spriegel 14 angebracht ist, und zieht den Spriegel entweder nach vorne oder nach hinten. Wenn der Griff 40 nach vorne bewegt wird; wird der Schlitten 12, da der Griff 40 unterhalb des Schlittens angeordnet ist, in die in den Figuren 5 bis 8 gezeigte Stellung verschwenkt. Dabei wird der hintenliegende Federarm 34 vorgespannt. In der verschwenkten Stellung wirkt das bezüglich des Fahrzeugs vordere, obere Ende des Körpers 22 des Schlittens 12 als Kippkante 42, die sich am Boden der Führungsnut 16 der Schiene 10 abstützt. Gleichzeitig entfernt sich das hintere obere Ende des Schlittens 22 vom Boden der Führungsnut 16. Durch diese Schwenkbewegung des Schlittens 12 innerhalb der Führungsschiene 10 werden die beiden Kissen 28 von den Seitenflächen 18 der Führungsnut 16 gelöst, so daß die Arretierung des Schlittens 22 aufgehoben ist. Dieser kann dann gegen einen geringen Widerstand in der Führungsschiene 10 verschoben werden, wobei dieser Widerstand bestimmt ist von der geringen Reibung einerseits zwischen der Kippkante 42 des Körpers 22 und dem Boden der Führungsnut 16 und andererseits zwischen der Abstützkappe 38 der Feder 32 und der Abstützfläche 20 der Schiene 10.

Sobald der Griff 40 wieder losgelassen wird, drückt der hinten liegende, vorgespannte Federarm 34 den Schlitten 22 wieder in die in den Figuren 1 bis 4 gezeigte Ausgangsstellung, in der die Kissen 22 zwischen die Seitenflächen 18 der Führungsnut 16 gedrückt werden und den Schlitten 12 arretieren.

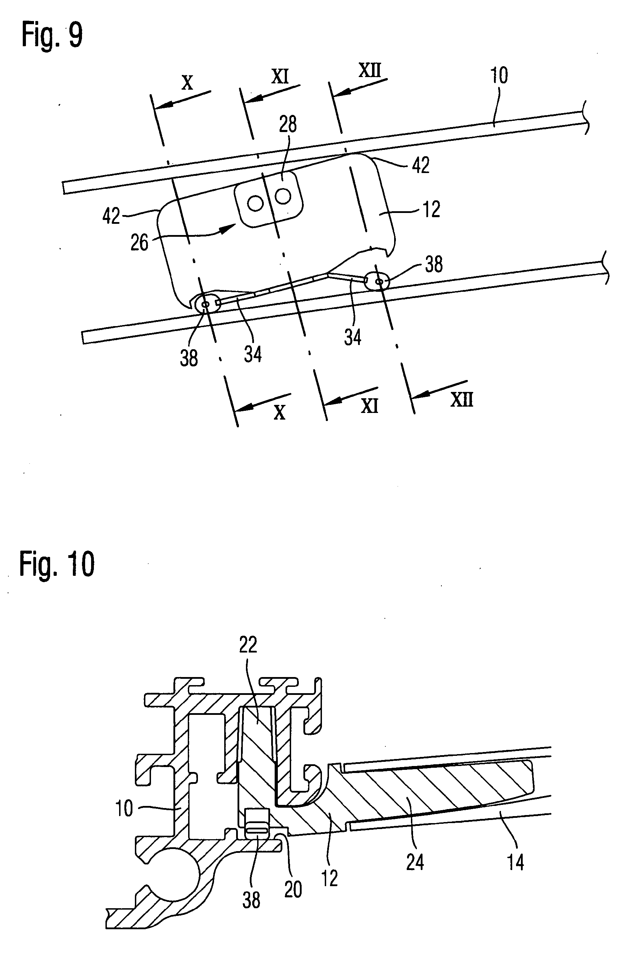

In den Figuren 9 bis 12 ist der Schlitten in der Position gezeigt, die er einnimmt, wenn der Spriegel 14 zusammen mit den beiden Schlitten 12 in der Führungsschiene 10 nach hinten verschoben wird. Da der Körper 22 spiegelsymmetrisch ist, bedarf es hier keiner weiteren Erläuterungen.

## Patentansprüche

1. Baugruppe bestehend aus mindestens einer Führungsschiene (10) und einem Schlitten (12), der in der Führungsschiene verschiebbar ist, insbesondere für ein Rollo oder einen Schiebehimmel für ein Kraftfahrzeug, wobei die Führungsschiene mit einer Bremsfläche (18) versehen ist und der Schlitten ein Bremselement (26) aufweist, das mit der Bremsfläche zusammenwirken kann, so daß der Schlitten in der Führungsschiene arretiert ist, wobei der Schlitten mindestens eine Feder (32) aufweist, die den Schlitten so beaufschlagt, daß das Bremselement (26) gegen die Bremsfläche (18) gedrückt wird, und wobei der Schlitten (12) mindestens eine Kippkante (42) aufweist, die von dem Bremselement (26) so beabstandet ist, daß der Schlitten entgegen der Wirkung der Feder (32) um die Kippkante (42) geschwenkt werden kann, wodurch das Bremselement (26) von der Bremsfläche gelöst wird.

2. Baugruppe nach Anspruch 1, **dadurch gekennzeichnet, daß** der Schlitten (12) bezüglich einer Querebene, die durch das Bremselement (26) läuft, symmetrisch ist, und daß an jedem Ende des Schlittens eine Kippkante (42) vorgesehen ist.

3. Baugruppe nach Anspruch 2, **dadurch gekennzeichnet, daß** auf jeder Seite der Querebene ein Federarm (34) vorgesehen ist.

4. Baugruppe nach Anspruch 2 und Anspruch 3, **dadurch gekennzeichnet, daß** die Kippkante (42) und der Teil (38) der Feder, der an der Führungsschiene (10) anliegt, aus einem Material mit einem niedrigen Reibungskoeffizienten bestehen.

5. Baugruppe nach Anspruch 4, **dadurch gekennzeichnet, daß** der gesamte Körper (22) des Schlittens (12) aus dem Material mit dem niedrigen Reibungskoeffizienten besteht.

6. Baugruppe nach Anspruch 4 oder Anspruch 5, **dadurch gekennzeichnet, daß** die Feder (32) eine Blattfeder (34) ist, die an ihrem freien Ende mit einer Abstützkappe (38) versehen ist, die aus dem Material mit dem niedrigen Reibungskoeffizienten besteht.

7. Baugruppe nach einem der vorhergehenden Ansprüche, **dadurch gekennzeichnet, daß** das Bremselement (26) aus einem Material mit einem hohen Reibungskoeffizienten besteht.

8. Baugruppe nach Anspruch 6, **dadurch gekennzeichnet, daß** die Bremsfläche durch zwei einander schräg gegenüberliegende Seitenflächen (18) einer Nut (16) gebildet ist und daß zwei Bremselemente (28) vorgesehen sind, die auf entgegengesetzten Seiten des Schlittens angeordnet sind.

9. Baugruppe nach einem der vorhergehenden Ansprüche, **dadurch gekennzeichnet, daß** zwei einander gegenüberliegende Führungsschienen (10) vorgesehen sind, in denen jeweils ein Schlitten (12) angeordnet ist, und daß die beiden Schlitten durch einen Spriegel (14) miteinander verbunden sind, an dem ein Griff (40) angebracht ist.
